# EUROPEAN PATENT APPLICATION

(11) **EP 3 413 561 A1**
(43) Date of publication of application: **12.12.2018**
(21) Application number: 18174748.6
(22) Date of filing: 29.05.2018
(51) Int. Cl.: H04N 7/18, B60R 1/00, G06K 9/32

(54) **DETECTION OF AN OCCLUSION OR SOILING DEGREE OF A NUMBER PLATE OF A MOTOR VEHICLE**

(30) Priority: 06.06.2017 DE 102017112393
(71) Applicant: Connaught Electronics Ltd., Tuam, County Galway (IE)
(72) Inventor: Newell, Martin, Tuam, County Galway, - (IE); Newell, Michael, Tuam, County Galway, - (IE)
(74) Representative: Jauregui Urbahn, Kristian

(57) **Abstract**

The invention relates to a method for operating a camera device (2) of a motor vehicle (1), including a) capturing at least a partial area (7) of a number plate (4) of the motor vehicle (1) by a camera unit (3) of the camera device (2); b) generating camera data representing the captured partial area (7) by the camera unit (3); and c) determining a soiling degree of the captured partial area (7) by a computing unit (8) of the camera device (2) based on the generated camera data; as well as d) outputting a warning signal to a user of the motor vehicle (1) by a signal unit (9) if the soiling degree is greater than a preset reference value to contribute to improved readability of the number plate (4).

## Description

The invention relates to a method for operating a camera device of a motor vehicle including capturing at least a partial area of a number plate of the motor vehicle by a camera unit of the camera device and generating camera data representing the captured partial area. The invention also relates to a camera device for a motor vehicle with a camera unit for capturing at least a partial area of a number plate of the motor vehicle as well as for generating camera data representing the captured partial area.

Modern motor vehicles often have one or more cameras capturing an environment of the motor vehicle. Therein, areas of the motor vehicle itself, for example a number plate attached to it, are also captured, be it completely or partially, thus at least in a partial area. So, for example with a camera attached to the rear side, which is typically used for a parking assistance function in the motor vehicle, a wide-angle camera is mostly employed, which also captures a partial area of the rear-side number plate of the motor vehicle.

At the same time, in many countries, users of a motor vehicle are bound by law to keep the number plate or plates of the used motor vehicle readable, that is to ensure readability, by for example keeping the number plate free of soils and/or occlusions. If the number plate or license plate of the motor vehicle is not readable, thus soiled and/or occluded, thus, the user of the motor vehicle may be threatened with a corresponding penalty.

Thus, there is set the technical object to contribute to improved readability of number plates.

This object is solved by the subject matters of the independent claims. Advantageous embodiments are apparent from the dependent claims, the description thereof and the figures.

The invention relates to a method for operating a camera device of a motor vehicle with a series of method steps. Therein, the motor vehicle can also be a vehicle/trailer combination with a towing vehicle and a trailer. One method step is capturing at least a partial area of a number plate of the motor vehicle by a camera unit of the camera device. In particular, the captured partial area can have characters, thus for example letters and/or numbers. A further method step is generating camera data, which represents the captured partial area, by the camera unit. Therein, the camera unit can comprise a camera, which has a wide-angle characteristic, that is, preferably has a capturing range of 180 degrees or more, for example of 190 degrees or more. Such cameras are also referred to as fish-eye cameras. Therein, the camera unit or camera can be disposed at the motor vehicle and/or a trailer.

Here, determining or ascertaining an occlusion or soiling degree of the captured partial area and thereby of the number plate or license plate by a computing unit of the camera device based on the generated camera data is important. Thus, readability of the number plate or of the captured partial area of the number plate is evaluated or ascertained. This readability is quantified by the soiling or occlusion degree. Therein, a high occlusion or soiling degree corresponds to poor or low readability and a low soiling degree corresponds to great readability. Here, ascertaining can be understood in terms of determining or evaluating. Since occlusion of the number plate by objects also deteriorates the readability of the license plate, occlusion of the number plate can also be considered as soiling here and correspondingly an occlusion degree can be considered as a soiling degree in the context of this document. A further method step is outputting an optical and/or acoustical warning signal to a user, for example a driver, of the motor vehicle by a signal unit of the motor vehicle and/or the camera device if, thus only if, the soiling degree is greater than a preset reference value. Therein, the signal unit can also be a portable signal unit, for example a mobile phone, which is logically coupled to the remaining camera device.

This has the advantage that the user, in particular a driver of the motor vehicle, is informed about the lack of readability of the number plate and thus can for example stop at the next opportunity to clean the number plate or to remove objects occluding the number plate and thus restore or increase the readability. Therein, the proposed method can already be realized with a plurality of existing camera devices, which already also capture a partial area of the number plate more or less randomly in providing information about an environment of the motor vehicle and thus can be utilized for the proposed method without additional hardware expenditure. Therein, the proposed method is not only useful for camera devices with a camera attached to the motor vehicle, but also for camera devices with a camera attached to a trailer. Thus, it can be used to ascertain the readability of the number plate or license plate of the trailer and/or of the motor vehicle.

In an advantageous embodiment, it is correspondingly provided that a partial area of an environment of the motor vehicle or of the camera device is also captured with the partial area of the number plate and the generated camera data also represents the captured partial area of the environment.

This has the advantage that the camera can also be used for further functions or functionalities or a camera already present in the motor vehicle now is additionally usable for the described method in synergistic manner.

Therein, it can be provided in a further embodiment to provide or use the camera data for a function of a further assistance device of the motor vehicle, in particular for a driver assistance device such as for example a parking assistance device.

This has the advantage of a particularly pronounced synergy with already existing functions of the motor vehicle.

In a further advantageous embodiment, it is provided that in ascertaining the soiling degree, edge detection, in particular edge detection for characters, that is edge detection for numbers and/or letters, is performed in the captured partial area. Therein, sharp edges in particular correspond to lower soiling and better readability and blurred edges correspond to greater soiling and worse readability.

This has the advantage that the soiling degree and thereby the readability are quantified in particularly simple and approved manner. Especially since number plates have a prescribed contrast ratio between the respective characters and a background, thus, the soiling degree or the readability can be particularly well quantified and ascertained.

In another advantageous embodiment, it is provided that one or more characters associated with the number plate are stored or recorded, in particular a character string associated with the number plate is stored or recorded in the computing unit, and the soiling degree is ascertained depending on the recorded character or characters or depending on the recorded character string. In particular, character recognition can thus be performed for the captured partial area in ascertaining the soiling degree. With the character or the character string, a format respectively preset for this character or the character string can also be recorded, which for example describes a font and/or a size and/or a position of the characters or character string on the number plate or the captured partial area of the number plate. A character distance can also be recorded for the recorded characters.

This has the advantage that the soiling degree can be particularly accurately and reliably ascertained since known advance information as it can for example be inferred from country-specific regulations for the respective license plates or number plates can be taken into account in determining the soiling degree and thereby the readability.

Therein, it is provided in a particularly preferred embodiment that the characters to be recorded or stored are or have been determined by the computing unit from the generated camera data or, preferably, from previously generated camera data for the or in the captured partial area. Thus, the computing unit can learn, which characters it should recognize. To this end, the capturing of the partial area and the generating of the camera data, in particular the determining of the soiling degree, too, can be carried out multiple times.

This has the advantage that the computing unit can learn, which characters should be recognizable at a well readable number plate, that is, a little soiled number plate. Since the license plate of a motor vehicle only rarely changes, thus, the soiling can be particularly reliably recognized as such.

In a further advantageous embodiment, it is provided that the number plate is disposed at a motor vehicle or at a trailer associated with the motor vehicle, that is, in particular a trailer attached to it, on the rear side.

This has the advantage that especially the rear-side number plate particularly prone to soiling of the motor vehicle or the trailer can be particularly easily improved in its readability in that the driver is made aware of required cleaning. In addition, modern motor vehicles or trailers often have cameras especially on the rear side, which for example provide a reversing assistance. Thus, this camera can be used for the described method without additional hardware expenditure to contribute to improved readability of the number plate.

The invention also relates to a camera device for a motor vehicle including a camera unit for capturing at least a partial area of a number plate of the motor vehicle as well as for generating camera data representing the captured partial area. Furthermore, the camera device comprises a computing unit, which is formed to determine or ascertain a soiling degree of the captured partial area based on the generated camera data. A signal unit, which is formed to output a warning signal to a user of the motor vehicle if the soiling degree is greater than a preset reference value is also part of the camera device.

Here, advantages and advantageous embodiments of the camera device correspond to advantages and advantageous embodiments of the method and vice versa.

In an advantageous embodiment, it is provided that the camera unit comprises at least one satellite camera, which serves for capturing the partial area. Here, a camera can be understood by a satellite camera, which is attached and used in different positions of the motor vehicle for different functions in the camera device or in the motor vehicle in identically constructed manner.

This has the advantage that it is contributed to the improved readability of the number plate in particularly simple and flexible manner.

The invention also relates to a motor vehicle with such a camera device.

The features and feature combinations mentioned above in the description as well as the features and feature combinations mentioned below in the description of figures and/or shown in the figures alone are usable not only in the respectively specified combination, but also in other combinations without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim. Moreover, implementations and feature combinations are to be considered as disclosed, in particular by the implementations set out above, which extend beyond or deviate from the feature combinations set out in the relations of the claims.

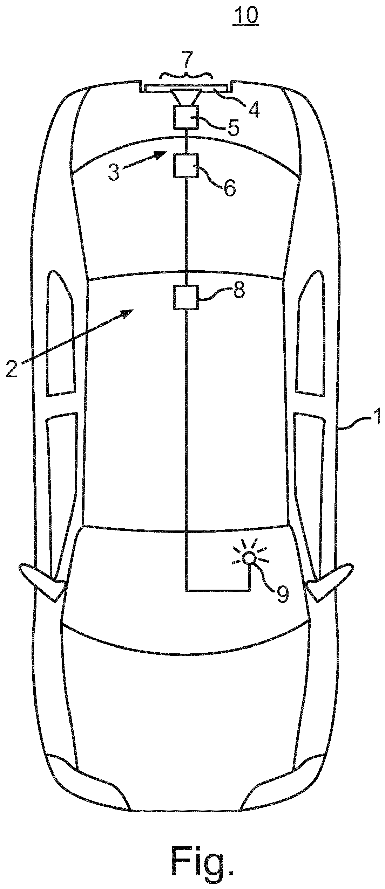

Below, embodiments of the invention are explained in more detail based on a schematic drawing. Therein, the only figure shows a motor vehicle with an exemplary embodiment of a camera device.

Therein, a motor vehicle 1 with a camera device 2 is illustrated in the figure, which comprises a camera unit 3 for capturing at least a partial area of a number plate 4 of the motor vehicle 1. Therein, the camera unit 3 presently includes a camera 5, which is configured as a wide-angle camera with a capturing angle of 190 degrees in this example, as well as a processing unit 6, which serves for generating camera data representing the captured partial area 7.

Further, the camera device 2 also comprises a computing unit 8, which is formed to ascertain a soiling degree of the partial area 7 or of the number plate 4 based on the generated camera data as well as a signal unit 9 presently formed as a lamp, which is formed to output an optical warning signal to a user of the motor vehicle 1 if the soiling degree of the number plate 4 is greater than a preset reference value and thus the readability of the number plate is impaired.

Presently, besides the partial area 7 of the number plate 4, a corresponding partial area of an environment 10 of the motor vehicle 1 is also captured by the camera 5. Thereby, the camera 5 or the camera unit 3 can be additionally used for further functions, for example for a parking assistance function.

## Claims

1. Method for operating a camera device (2) of a motor vehicle (1), including the method steps of
a) capturing at least a partial area (7) of a number plate (4) of the motor vehicle (1) by a camera unit (3) of the camera device (2);
b) generating camera data representing the captured partial area (7) by the camera unit (3);
**characterized by**
c) determining a soiling degree of the captured partial area (7) by a computing unit (8) of the camera device (2) based on the generated camera data;
d) outputting a warning signal to a user of the motor vehicle (1) by a signal unit (9) if the soiling degree is greater than a preset reference value.

2. Method according to claim 1,
**characterized in that**
a partial area of an environment (10) of the motor vehicle (1) is also captured with the partial area (7) of the number plate (4) and the generated camera data also represents the captured partial area of the environment (10).

3. Method according to any one of the preceding claims,
**characterized in that**
the camera data is provided for a function of a further assistance device of the motor vehicle (1), in particular a driver assistance device.

4. Method according to any one of the preceding claims,
**characterized in that**
in determining the soiling degree, edge detection is performed in the captured partial area (7).

5. Method according to any one of the preceding claims,
**characterized in that**
characters associated with the number plate (4) are recorded, in particular a character string associated with the number plate (4) is recorded in the computing unit (8) and the soiling degree is ascertained depending on the recorded characters.

6. Method according to claim 5,
**characterized in that**
the characters to be recorded are determined by the computing unit (8) from the generated camera data for the captured partial area (7).

7. Method according to any one of the preceding claims,
**characterized in that**
the number plate (4) is disposed at the motor vehicle (1) or at a trailer associated with the motor vehicle (1) on the rear side.

8. Camera device (2) for a motor vehicle (1), including
- a camera unit (3) for capturing at least a partial area (7) of a number plate (4) of the motor vehicle (1), as well as for generating camera data representing the captured partial area (7);
**characterized by**
- a computing unit (8), which is formed to determine a soiling degree of the captured partial area (7) based on the generated camera data; as well as
- a signal unit (9), which is formed to output a warning signal to a user of the motor vehicle (1) if the soiling degree is greater than a preset reference value.

9. Camera device (2) according to claim 8,
**characterized in that**
the camera unit (3) comprises at least one satellite camera.

10. Motor vehicle (1) with a camera device (2) according to claim 8 or 9.
